# EUROPEAN PATENT SPECIFICATION

(11) **EP 2 302 979 B1**
(45) Date of publication and mention of the grant of the patent: **01.08.2012**
(21) Application number: 09171181.2
(22) Date of filing: 24.09.2009
(51) Int. Cl.: H04W 92/20

(54) **Method for enabling home base stations to collaborate in a wireless cellular telecommunication network**
Verfahren zur Aktivierung von Heimbasisstationen zur Kollaboration in einem drahtlosen zellulären Kommunikationsnetzwerk
Procédé d'habilitation de la collaboration de stations de base à domicile dans un réseau de télécommunication cellulaire sans fil

(43) Date of publication of application: 30.03.2011
(73) Proprietor: Mitsubishi Electric R&D Centre Europe B.V., 1119 NS Schiphol Rijk (NL); Mitsubishi Electric Corporation, Chiyoda-ku Tokyo 100-8310 (JP)
(72) Inventor: Khanfouci, Mourad, 35708 Rennes Cedex 7 (FR); Bonneville, Hervé, 35708 Rennes Cedex 7 (FR); Gresset, Nicolas, 35708 Rennes Cedex 7 (FR)
(74) Representative: Maillet, Alain

(56) References cited:
- EP-A- 1 775 976
- US-A1- 2007 097 939
- US-A1- 2008 261 602

## Description

The present invention relates generally to a method and a device for enabling home base stations to collaborate in a wireless cellular telecommunication network.

Classical wireless cellular telecommunication networks provide coverage of wireless services in wide areas. Macro-cells are used to pave the coverage area of the wireless cellular telecommunication network.

A macro-cell has a coverage area of around ten km².

Each cell is controlled by one base station, which has to be connected to each base station controlling a neighbour cell for the purpose of preparing/triggering handover for the mobile terminals, load balancing, interference management, coordinated multi-point transmission or any other function that necessitates the collaboration of the base station with its neighbour base stations.

At the setup of a base station, the base station configures the radio interface, the network interface, i.e. configures the connexion links with neighbour base stations and servers and starts transmitting on a broadcast channel, together with pilot signals and so on.

The mobile terminal, which is located in the cell managed by the base station, can make measurements on signals transmitted by surrounding base stations so as to prepare/trigger a handover from the base station which is currently managing the cell in which the mobile terminal is located to another cell managed by one of the surrounding base stations, or to allow the base station handling the mobile terminal to perform load balancing, interference management coordinated multi-point transmission or any other function that necessitates the collaboration of the base station with its neighbour base stations.

The configuration of the connection links is an important point to be considered and solved in classical wireless cellular telecommunication networks.

When the wireless cellular telecommunication networks also comprise micro-cells which have a reduced coverage area of around 0.1 km², the number of neighbour cells of a macro-cell increases. The problem generated by the number of connection links increases.

Aforementioned problems become more important with cells having lower coverage areas like pico-cells or femto-cells.

It has been proposed to extend the coverage of Public Land Mobile Networks or (PLMN) wireless cellular telecommunication networks with pico-cells and femto-cells.

A pico-cell has a coverage area of around few thousands m², while a femto-cell has a coverage area of around hundred m². As for macro and micro-cells, each base station which manages one pico or femto-cell should be connected to each base station controlling a neighbour cell of the pico or femto-cell and for the different reasons already mentioned for base stations.

Base stations managing pico or femto cells are classically set up within home or offices, they are usually named home base stations.

Home base stations enable a restricted number of mobile terminals to use their resources in order to have access to the wireless cellular telecommunication network. The home base stations managing pico or femto are associated to these allowed mobile terminals as they allow these mobile terminals to use their resources in order to have access to the wireless cellular telecommunication network.

Home base stations use different communication parameters for communicating with the mobile terminals they are respectively associated to.

The patent application US 2008/261602 discloses a backhaul network for femto base stations.

The patent application EP1775976 discloses a method for enabling a base station to connect to a wireless telecommunication network.

The patent application US 2007/097939 discloses an automatic configuration of pico base station.

The aim of the invention is therefore to propose a method and a device which intend to enable home base stations to collaborate with other home base stations if they are ready to allocate some of their resources to mobile terminals they are not associated to.

To that end, the present invention concerns a method for enabling home base stations to collaborate in a wireless cellular telecommunication network comprising plural home base stations and a coordinator, **characterised in that** the method comprises the steps executed by the coordinator of:
- receiving from a home base station a message notifying that the home base station is available for collaborating with at least another home base station,
- obtaining a list of home base stations which are neighbour of the home base station which transferred the message,
- checking if at least one home base station which is neighbour of the home base station which transferred the message is available for collaborating with at least another home base station,
- determining common parameters to be used by the home base station which transferred the message and the at least one home base station which is neighbour of the home base station and which is available for collaborating,
- transferring the determined common parameters to the home base station which transferred the message and/or to the at least one home base station which is neighbour of the home base station and which is available for collaborating,
- establishing a connection with the home base station which transferred the message and the at least one home base station which is neighbour of the home base station and which is available for collaborating by relaying information received from the home base station which transferred the message to each home base station which is neighbour of the home base station and which is available for collaborating and/or by relaying information received from each home base station which is neighbour of the home base station and which is available for collaborating to the home base station which transferred the message.

The present invention also concerns a device for enabling home base stations to collaborate in a wireless cellular telecommunication network comprising plural home base stations and a coordinator, **characterised in that** the device for enabling home base stations to collaborate is included in the coordinator and comprises:
- means for receiving from a home base station a message notifying that the home base station is available for collaborating with at least another home base station,
- means for obtaining a list of home base stations which are neighbour of the home base station which transferred the message,
- means for checking if at least one home base station which is neighbour of the home base station which transferred the message is available for collaborating with at least another home base station,
- means for determining common parameters to be used by the home base station which transferred the message and the at least one home base station which is neighbour of the home base station and which is available for collaborating,
- means for transferring the determined common parameters to the home base station which transferred the message and/or to the at least one home base station which is neighbour of the home base station and which is available for collaborating,
- means for establishing a connection with the home base station which transferred the message and the at least one home base station which is neighbour of the home base station and which is available for collaborating by relaying information received from the home base station which transferred the message to each home base station which is neighbour of the home base station and which is available for collaborating and/or by relaying information received from each home base station which is neighbour of the home base station and which is available for collaborating to the home base station which transferred the message.

Thus, home base stations are able to collaborate with other home base stations if they are ready to allocate some of their resources to mobile terminals they are not associated to and even if they were using different communication parameters.

Furthermore, the amount of connections between home base stations is reduced. Two home base stations are connected each other through the coordinator and only when it is necessary i.e. when both home base stations are available for collaboration.

Normally, home base stations enable only a restricted number of mobile terminals to use their resources in order to have access to the wireless cellular telecommunication network. Thanks to the present invention, when a home base station is available for collaboration, a more important number of mobile terminals may be allowed to have access to the wireless cellular telecommunication network through the available home base station.

According to a particular feature, the coordinator:
- receives from the home base station which transferred the message information representative of a requirement for the collaboration,
- checks if resources that can be provided by the at least one home base station which is neighbour of the home base station and which is available for collaborating are compatible with the requirement,
- establishes the connection only if resources that can be provided by the at least one home base station which is neighbour of the home base station and which is available for collaborating are compatible with the requirement.

Thus, connections between home base stations are established only if a required communication quality of service like bit rate or latency can be reached.

According to a particular feature, the coordinator :
- determines statistics on the availability of home base stations for collaborating,
- determines if at least one home base station which is neighbour of the home base station which transferred the message may become available for collaborating if no home base station which is neighbour of the home base station which transferred the message is available for collaborating,
- transfers a waiting notification to the home base station which transferred the message if at least one home base station which is neighbour of the home base station which transferred the message may become available for collaborating.

Thus, the coordinator improves the coordination group creation for the home base station which transferred the message with respect to the case where no availability statistics are used.

This will increase the number of possible collaborating home base stations with the home base station which transferred the message for every request from it, fulfilling its collaborating service request.

According to a particular feature, the coordinator notifies the home base station which transferred the message that collaboration session is not accepted if no home base station which is neighbour of the home base station which transferred the message may become available for collaborating.

Thus, the resources of home base station which transferred the message are saved and no resources are allocated at the home base station which transferred the message for collaboration if no collaborating home base station is found or no collaborating base station may be found in the future.

According to a particular feature, the coordinator :
- determines statistics on the availability of home base stations for collaborating,
- determines if resources that can be provided by at least one home base station which is neighbour of the home base station which transferred the message may become compatible with the requirement,
- transfers a waiting notification to the home base station which transferred the message if resources that can be provided by at least one home base station which is neighbour of the home base station which transferred the message may become compatible with the requirement.

Thus, the coordinator improves the coordination group creation for the home base station which transferred the message with respect to the case where no availability statistics are used.

This will increase the number of possible collaborating home base stations with the home base station which transferred the message for every request from it, fulfilling its collaborating service request.

According to a particular feature, the coordinator notifies the home base station which transferred the message that collaboration session is not accepted if resources that can be provided by at least one home base station which is neighbour of the home base station which transferred the message may not become compatible with the requirement.

Thus, the collaboration is established only if the requirement can be reached. According to a particular feature, the coordinator :
- receives from one home base station a message notifying that the home base station is not available for collaborating,
- determines statistics on the availability for collaborating of the home base station which transferred the message notifying that the home base station is not available for collaborating,
- releases the connection with the home base station which transferred the message notifying that the home base station is not available for collaborating and releases the connection with the at least one home base station which is collaborating with the home base station which transferred the message notifying that the home base station is not available.

Thus, the coordinator maintains the connection between the home base station which transferred the message and the collaborating home base station only when the home base stations are available for collaborating. The coordinator will use the non availability for collaboration in order to avoid unnecessary resources allocation for the home base station not available for collaboration.

According to a particular feature, at least two home base stations collaborate by executing a handover of a mobile terminal handled by one of the home base stations.

Thus, the coordinator helps at least one mobile terminal handled by the home base to trigger handover to at least one base station from the collaborating group of home base stations in order to solve radio link failure or service failure.

At least one mobile terminal handled by one collaborating home base station may handover to at least one collaborating home base station of the group of collaborating home base stations connected to the coordinator in order to maintain good link quality during the collaboration session.

According to a particular feature, at least two home base stations collaborate by executing a joint coordinated multi-point transmission.

Thus, the collaborating home base stations transmit synchronously copies of the data transferred by the home base station which transferred the message, increasing the data rate and the quality of service for the at least one mobile terminal handled by the home base station.

According to a particular feature, the list of home base stations which are neighbour of the home base station which transferred the message is obtained from at least one measurement report transferred by at least one mobile terminal handled by the home base station which transferred the message and/or by at least one measurement from the home base station which transferred the message.

Thus, the determination of neighbor home base stations is accurate as it is based on accurate measurement.

The fact that measurement report transferred by at least one mobile terminal as used for the determination of neighbor home base stations doesn't increase the overall complexity of the system.

According to a particular feature, a home base station is available for collaborating with at least another home base station if the home base station has enough resources for assuming new communications in which mobile terminals are involved.

Thus, the home base station will autonomously connect to the coordinator only if it has enough resources for collaborating with at least another home base station, limiting signalling overhead and saving resources.

According to a particular feature, a home base station is available for collaborating with at least another home base station if the link quality between the home base station and the communication network is higher than a predetermined value.

Thus, the home base station will minimize collaboration session failure and provide good quality of service to at least one mobile terminal handled by the home base station.

According to a particular feature, a home base station is available for collaborating with at least another home base station if the holder of the home base station configures the home base station into a collaboration mode.

Thus, this will increase security of the collaboration with the home base station which transferred the message by limiting the unwanted use of the home base station resources. The holder of the home base station may decide on its own, avoiding then to share the resources of its home base station when he needs a large amount of resources of its home base station.

According to still another aspect, the present invention concerns a computer program which can be directly loadable into a programmable device, comprising instructions or portions of code for implementing the steps of the method according to the invention, when said computer program is executed on a programmable device.

Since the features and advantages relating to the computer program are the same as those set out above related to the method and device according to the invention, they will not be repeated here.

The characteristics of the invention will emerge more clearly from a reading of the following description of an example embodiment, the said description being produced with reference to the accompanying drawings, among which :
Fig. 1 represents a wireless cellular telecommunication network in which the present invention is implemented;
Fig. 2 is a diagram representing the architecture of a coordinator in which the present invention is implemented ;
Fig. 3 is a diagram representing the architecture of a home base station in which the present invention is implemented ;
Fig. 4 discloses an example of an algorithm executed by each home base station to the present invention ;
Figs. 5a and 5b discloses an example of an algorithm executed by the coordinator according to the present invention.

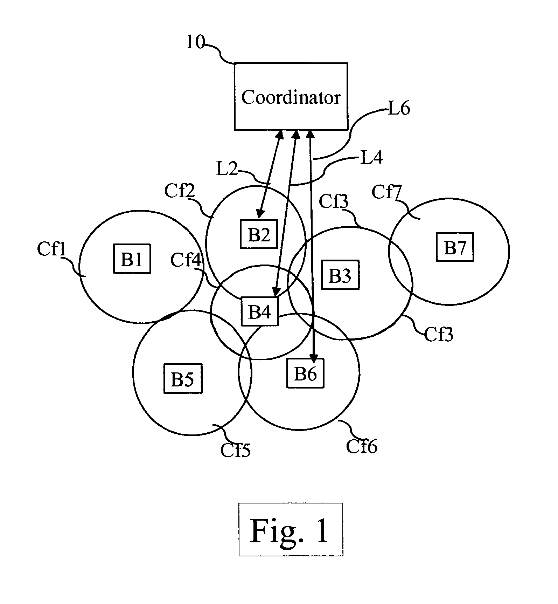

Fig. 1 represents a wireless cellular telecommunication network in which the present invention is implemented.

The wireless cellular telecommunication network is composed of plural cells of home base stations not shown in the Fig. 1 and comprises plural micro-cells Cfi with i=1 to 7 of home base stations Bi.

Only seven home base stations B1 to B7 and seven micro-cells Cf1 to Cf7 are represented in Fig. 1 for the sake of clarity but the wireless cellular telecommunication network comprises a more important number of nodes or home base stations and cells.

The home base stations B1 to B7 are named also femto base stations or pico base stations.

The home base stations B1 to B7 are able to receive signals transferred by mobile terminals which are located in their respective cells Cf1 to Cf7. The home base stations B1 to B7 transfer signals which can be received and processed by mobile terminals located in their respective cells Cf1 to Cf7.

The wireless cellular telecommunication network comprises at least one core network device not shown in Fig. 1 which manages the operation of the wireless cellular telecommunication network.

The collaboration of the home base stations B1 to B7 is managed by a device named coordinator 10.

In the Fig. 1, the coordinator 10 is a device which is different from base stations, home base stations B1 to B7 or a core network device. In other examples of realisation, the coordinator 10 may be comprised in one home base station B1 to B7 or may be comprised in a base station not shown in Fig. 1 or in one core network device.

As the home base stations B1 or B7 are close to each other, the cells Cf1 to Cf7 overlap each other. When cells of two home base stations overlap, the two home base stations are considered as to be neighbour.

The home base station B1 is neighbour of the home base station B5.

The home base station B2 is neighbour of the home base stations B3 and B4.

The home base station B3 is neighbour of the home base stations B2, B4, B6 and B7.

The home base station B4 is neighbour of the home base stations B2, B3, B5 and B6.

The home base station B5 is neighbour of the home base stations B1, B4 and B6.

The home base station B6 is neighbour of the home base stations B3, B4 and B5.

The home base station B7 is neighbour of the home base station B3.

According to the invention, the coordinator 10 :
- receives, from a home base station, a message notifying that the home base station is available for collaborating with at least another home base station,
- obtains a list of home base stations which are neighbour of the home base station which transferred the message,
- checks if at least one home base station which is neighbour of the home base station which transferred the message is available for collaborating with at least another home base station,
- determines common parameters to be used by the home base station which transferred the message and the at least one home base station which is neighbour of the home base station and which is available for collaborating,
- transfers the determined common parameters to the home base station which transferred the message and/or to the at least one home base station which is neighbour of the home base station and which is available for collaborating,
- establishes a connection with the home base station which transferred the message and the at least one home base station which is neighbour of the home base station and which is available for collaborating by relaying information received from the home base station which transferred the message to the or each home base station which is neighbour of the home base station and which is available for collaborating and/or by relaying information received from the or each home base station which is neighbour of the home base station and which is available for collaborating to the home base station which transferred the message.

Each home base station Bi is linked to a communication network not shown in the Fig. 1.

The link L2 links the home base station B2 and the coordinator 10.

The link L6 links the home base station B6 and the coordinator 10.

The link L4 links the home base station B4 and the coordinator 10.

The links L2 and L4 represent the connection between the home base stations B2 and B4 using the coordinator 10 which acts as a relay during a collaboration session.

The links L2 and L6 represent the connection between the home base stations B2 and B6 using the coordinator 10 which acts as a relay during a collaboration session.

The links L2, L4 and L6 are established on a communication network like a DSL network or an Integrated Services Digital Network or an Internet network or a PSTN network or a radio network or a combination of at least two of the above mentioned networks.

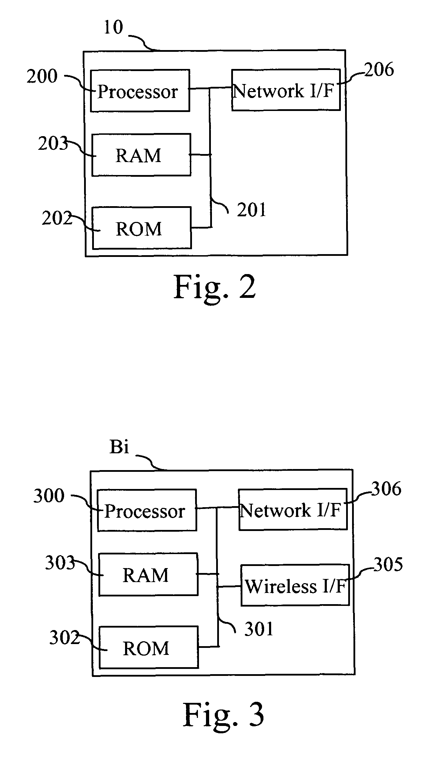

**Fig. 2** is a diagram representing the architecture of a coordinator in which the present invention is implemented.

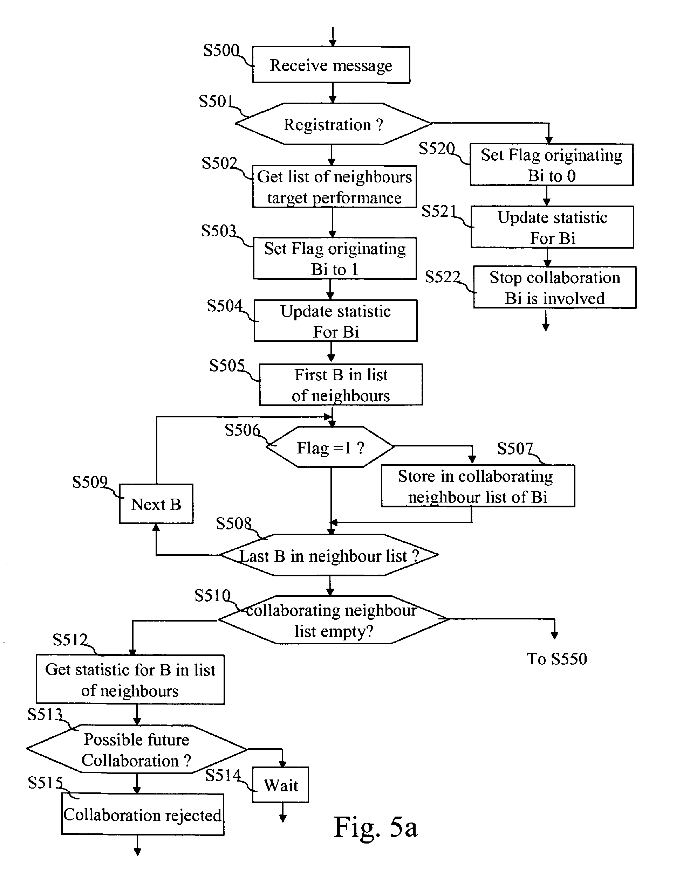

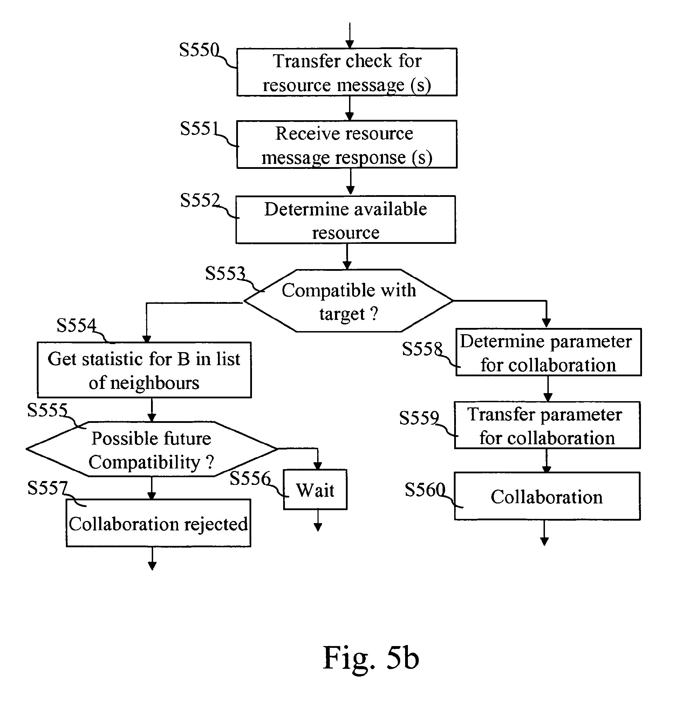

The coordinator 10 has, for example, an architecture based on components connected together by a bus 201 and a processor 200 controlled by the program as disclosed in Figs. 5a and 5b.

It has to be noted here that, instead of being based on a processor, the architecture of the coordinator may be based on dedicated integrated circuits.

The bus 201 links the processor 200 to a read only memory ROM 202, a random access memory RAM 203 and a network interface 206.

The memory 203 contains registers intended to receive variables and the instructions of the program related to the algorithm as disclosed in Figs. 5a and 5b.

The processor 200 controls the operation of the network interface 206.

The read only memory 202 contains instructions of the programs related to the algorithm as disclosed in Figs. 5a and 5b, which are transferred, when the coordinator 10 is powered on, to the random access memory 203.

The coordinator 10 is connected to a telecommunication network through the network interface 206.

For example, the network interface 206 is a DSL (Digital Subscriber Line) modem, or an ISDN (Integrated Services Digital Network) interface, etc.

Through the network interface 206, the coordinator 10 may transfer and/or receive messages to the core network device of the wireless cellular telecommunication network.

The network interface 206 is used also for relaying messages and data between home base stations which collaborate.

**Fig. 3** is a diagram representing the architecture of a home base station in which the present invention is implemented.

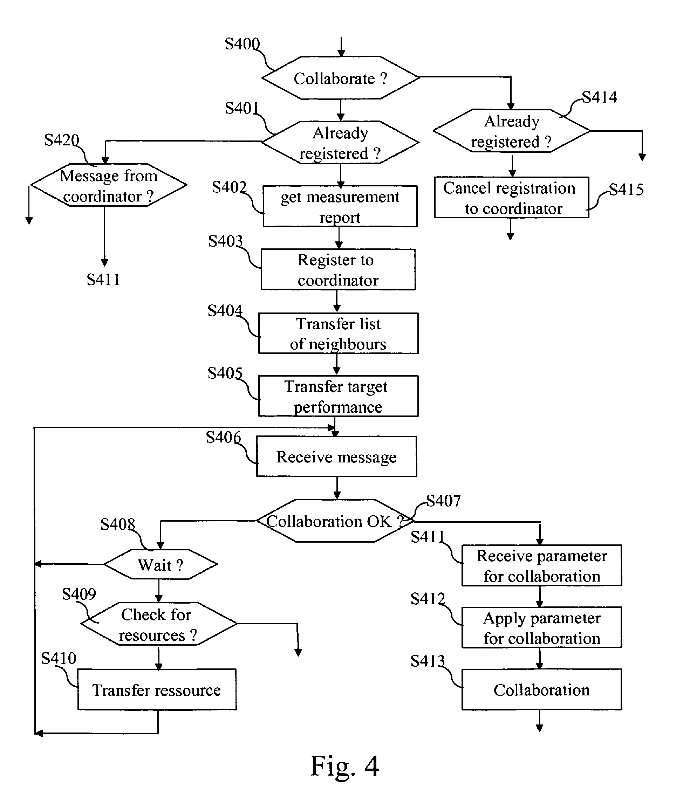

Each home base station Bi with i=1 to 7 has, for example, an architecture based on components connected together by a bus 301 and a processor 300 controlled by the programs as disclosed in Fig. 4.

It has to be noted here that, instead of being based on a processor, the architecture of the coordinator may be based on dedicated integrated circuits.

The bus 301 links the processor 300 to a read only memory ROM 302, a random access memory RAM 303, a wireless interface 305 and a network interface 306.

The memory 303 contains registers intended to receive variables and the instructions of the program related to the algorithm as disclosed in Fig. 4.

The processor 300 controls the operation of the network interface 306 and controls the operation of the wireless interface 305.

The read only memory 302 contains instructions of the program related to the algorithm as disclosed in Fig. 4, which are transferred, when the home base station Bi is powered on, to the random access memory 303.

The home base station Bi is connected to a telecommunication network through the network interface 306. For example, the network interface 306 is a DSL (Digital Subscriber Line) modem, or an ISDN (Integrated Services Digital Network) interface, etc.

Through the network interface 306, the home base station Bi may transfer and/or receive messages to and/or from the coordinator 10.

**Fig. 4** discloses an example of an algorithm executed by each home base station to the present invention.

More precisely, the present algorithm is executed by the processor 300 of each home base station Bi with i=1 to 7.

The present algorithm is executed periodically or on particular events.

At step S400, the processor 300 checks if the home base station Bi is available for collaborating with other home base stations.

The home base station Bi is available for collaborating with other home base stations if the home base station Bi has enough resources like radio resources for assuming new communications in which mobile terminals are involved and/or if the link quality between the home base station on the communication network is higher than a predetermined value and/or when the holder of the home base station Bi configures the home base station to a collaboration mode.

The home base station Bi is available for collaborating with other home base stations if the home base station Bi receives a message from the coordinator 10 indicating that a current collaboration session is released.

The home base station Bi is available for collaborating with other home base stations if the home base station Bi receives a message from the coordinator 10 indicating that a collaboration session is started.

If the home base station Bi is available for collaborating with other home base stations, the processor 300 moves to step S401. Otherwise, the processor 300 moves to step S414.

At step S401, the processor 300 checks if the home base station Bi is currently registered in the coordinator 10 as collaborating or as available for collaborating with other home base stations.

If the home base station Bi is currently registered in the coordinator 10 as collaborating or as available for collaborating with other home base stations, the processor 300 moves to step S402. Otherwise, the processor 300 moves to step S420.

At step S420, the processor 300 checks if the home base station Bi receives a message from the coordinator 10 indicating that a collaboration session is started.

If the home base station Bi receives a message from the coordinator 10 indicating that a collaboration session is started, the processor 300 moves to step S411. Otherwise, the processor 300 interrupts the present algorithm.

At step S402, the processor 300 gets at least one measurement report which has been previously received from at least one mobile terminal managed by the home base station Bi and/or gets at least one measurement report done within the home base station.

A mobile terminal is managed or handled by a home base station Bi when it can receive or establish a communication with a remote telecommunication device through the home base station Bi.

A measurement report comprises information representative of the signal power strength of signals transferred by surrounding home base stations which are received by the mobile terminal or by the home base station Bi.

At next step S403, the processor 300 commands the transfer of a registration message to the coordinator 10 through the network interface 306.

The registration message is representative of the availability of the home base station Bi to collaborate with other home base stations.

The registration message further comprises at least one parameter of the home base station.

The at least one parameter may be the carrier frequency or frequencies used for uplink and/or downlink channel, information related to the clock of the home base station Bi and/or the frequency band or bands used for uplink and/or downlink channel.

At next step S404, the processor 300 commands the transfer of information representative of the list of the home base stations which are neighbour of the home base station Bi to the coordinator 10 through the network interface 306.

Information representative of the list of the home base stations which are neighbour of the home base station Bi may be the identifiers of the neighbour home base stations or at least one measurement report.

At next step S405, the processor 300 commands the transfer of a target performance expected for the collaboration.

The target performance may be an expected quality of service like an expected throughput or an expected latency. The target performance may be a minimum number of home base stations available for collaborating with the home base station Bi.

At next step S406, the processor 300 detects the reception of a response message through the network interface 306.

At next step S407, the processor 300 checks if the response message is representative of an acceptance for collaboration. The response message is received from the coordinator 10 through the network interface 306.

If the message is representative of an acceptance for collaboration, the processor 300 moves to step S411. Otherwise, the processor 300 moves to step S408.

At step S408, the processor 300 checks if the response message is representative of a waiting notification.

If the response message is representative of a waiting notification, the processor 300 returns to step S406 and waits for the reception of a new message from the coordinator 10. Otherwise, the processor 300 moves to step S409.

At step S409, the processor 300 checks if a message requesting the amount of resources the home base station Bi is ready to allocate for the collaboration is received. The message is transferred by the coordinator 10.

If a message requesting the amount of resources the home base station Bi is ready to allocate for the collaboration is received, the processor moves to step S410. Otherwise, the collaboration is rejected by the coordinator 10 and the processor 300 interrupts the present algorithm.

At step S410, the processor 300 determines the amount of resources the home base station Bi is ready to allocate for the collaboration.

The amount of resources that the home base station Bi is ready to allocate for the collaboration may be set by the holder of the home base station Bi and stored in the RAM memory 303.

The amount of resources the home base station Bi is ready to allocate for the collaboration may be defined as a value which may be variable in time.

At the same step, the processor 300 commands the transfer of a message to the coordinator 10 comprising the amount of resources the home base station Bi is ready to allocate for the collaboration.

After that, the processor 300 returns to step S406.

At step S411, the processor 300 detects the reception of a message from the coordinator 10 comprising the at least one parameter to be used by the home base station Bi for the collaboration.

The at least one parameter may be the carrier frequency or frequencies used for uplink and/or downlink channel, information related to the clock synchronisation of the home base station Bi and/or the frequency band or bands used for uplink and/or downlink channel.

At next step S412, the at least one parameter to be used by the home base station Bi for the collaboration is applied by the home base station Bi.

At next step S413, the processor 300 starts a collaboration session.

A link is established between the home base station Bi and the coordinator 10 and a link is established between at least one neighbour home base station which is available for collaboration and the coordinator 10.

According to a first example of realisation, the collaboration session may be a handover of a mobile terminal between the home base station Bi and at least one neighbour home base station which is available for collaboration.

The home base station Bi receives from the coordinator 10 information enabling the encryption of transferred data, information related to the ongoing communication like control information and data.

According to a second example of realisation, the collaboration session may be a Joint coordinated multi- point transmission (J-CoMP).

A Joint coordinated multi-point transmission is a multicast transmission where in plural home base stations HBS transmit synchronously the same flow of data to at least one mobile terminal.

The home base station Bi is synchronized with the coordinator 10 like the at least one neighbour home base station which is available for collaboration. The home base station Bi and the at least one neighbour home base station receive and transmit information related to the communication from and to the coordinator 10 which acts as a relay for the data and control information of the base station Bi.

After that, the processor 300 interrupts the present algorithm.

At step S414, the processor 300 checks if the home base station Bi is currently registered in the coordinator 10 as available for collaborating with other home base stations.

If the home base station Bi is currently registered in the coordinator 10 as available for collaborating with other home base stations, the processor 300 moves to step S415. Otherwise, the processor 300 moves to step S420.

At step S415, the processor 300 commands the transfer of a cancel registration message to the coordinator 10 through the network interface 306.

The cancel registration message is representative of the non availability of the home base station Bi to collaborate with other home base stations.

After that, the processor 300 interrupts the present algorithm.

**Figs. 5a** **and** **5b** disclose an example of an algorithm executed by the coordinator according to the present invention.

More precisely, the present algorithm is executed by the processor 200 of the coordinator 10.

At step S500 of Fig. 5a, the processor 200 detects the reception of a message by the network interface 206.

At next step S501, the processor 200 checks if the received message is a registration message transferred by one home base station, for example the home base station B4.

The registration message is representative of the availability of the home base station B4 to collaborate with other home base stations.

The registration message further comprises at least one parameter of the home base station B4 which transferred the registration message.

The at least one parameter may be the carrier frequency or frequencies used for uplink and/or downlink channel, information related to the clock of the home base station Bi and/or the frequency band or bands used for uplink and/or downlink channel.

If the received message is a registration message transferred by one home base station, the processor 200 moves to step S502. If the received message is a registration cancellation message transferred by one home base station, the processor 200 moves to step S520.

At next step S502, the processor 200 gets the list of the home base stations which are neighbour of the home base station B4.

The list of the home base stations which are neighbour of the home base station B4 may be transferred by the home base station B4.

The list of the home base stations which are neighbour of the home base station B4 may be derived by the coordinator 10 from at least one measurement report transferred by the home base station B4.

According to the example of Fig. 1, the home base stations B2, B3, B5 and B6 are comprised in the list of the home base stations which are neighbour of the home base station B4.

At the same time, the processor 200 receives the target performance expected by the home base station B4 for the collaboration.

The target performance may be an expected quality of service like an expected throughput or an expected latency. The target performance may be a minimum number of home base stations which should collaborate with home base station Bi or any other target performance expected from collaboration.

At next step S503, the processor 200 sets the flag associated to the home base station B4 which sent the message received at step S500 at the value one.

The value one is representative of the availability of the home base station B4 to collaborate with at least one other home base station.

At next step S504, the processor 200 updates statistics related to the home base station B4 which sent the message received at step S500.

Statistics are related to the availability of the home base station B4 to collaborate with other home base stations.

For example, statistics are performed in order to predict at which period of the day or of a week, the probability that the home base station B4 is available for collaborating with other home base stations.

Statistics are related to the amount of resources the home base station B4 is ready to allocate in the collaboration session with other home base stations.

For example, statistics are evaluated in order to predict the amount of resources the home base station B4 is ready to allocate in the collaboration session with other home base stations at different periods of the day or of a week.

At next step S505, the processor 200 selects a first home base station in the list of the home base stations which are neighbour of the home base station B4.

For example, the processor 200 selects the home base station B2.

At next step S506, the processor 200 checks if the flag associated to the selected home base station B2 is set to the value one, i.e. if the selected home base station B2 is available for collaborating.

For example, the flag associated to the selected home base station B2 is set to the value one, the flag associated to the selected home base station B3 is set to the null value, the flag associated to the selected home base station B5 is set to the null value and the flag associated to the selected home base station B6 is set to the value one.

If the flag associated to the selected home base station B4 is set to the value one, the processor 200 moves to step S507. Otherwise, the processor 200 moves to step S508.

At step S507, the processor 200 stores information enabling the identification of the selected home base station in a list of home base stations available for collaborating with the home base station B4 which sent the message received at step S500.

The processor 200 stores information enabling the identification of the selected home base station B2 in the list of home base stations available for collaborating with the home base station B4.

After that, the processor 200 moves to step S508.

At step S508, the processor 200 checks if each home base station comprised in the list of the home base stations which are neighbour of the home base station B4 has been selected.

If each home base station comprised in the list of the home base stations which are neighbour of the home base station B4 has been selected, the processor 200 moves to step S510. Otherwise, the processor 200 moves to step S509.

According to the above mentioned example, the processor 200 moves to step S509, selects successively the home base stations B3, B5 and B6, does not store information enabling the identification of the home base stations B3 and B5 in the list of home base stations available for collaborating with the home base station B4 and stores information enabling the identification of the home base station B6 in the list of home base stations available for collaborating with the home base station B4.

At step S510, the processor 200 checks if the list of home base stations available for collaborating with the home base station B4 which transferred the message received at step S500 is empty.

If the list of home base stations available for collaborating with the home base station B4 which transferred the message received at step S500 is empty, the processor 200 moves to step S512. Otherwise, the processor 200 moves to step S550 of the Fig. 5b.

At step S512, the processor 200 gets statistics related to the neighbour home base stations which are not comprised in the list of home base stations available for collaborating with the home base station B4 which sent the message received at step S500.

Statistics are related to the availability of the neighbour home base stations which are not comprised in the list of home base stations available for collaborating with the home base station B4 to collaborate with other home base stations.

For example, statistics intend to predict at which period of the day or of a week the neighbour home base stations which are not comprised in the list of home base stations available for collaborating with the home base station B4 may be available for collaborating with home base station B4.

At next step S513, the processor 200 checks if, according to the statistics related to at least one neighbour home base station which is not comprised in the list of home base stations available for collaborating with the home base station B4 which sent the message received at step S500, one of these home base stations may be available in the near future, for example, within one hour, for collaborating with the home base station B4.

If at least one neighbour home base station which is not comprised in the list of home base stations available for collaborating with the home base station B4 may be available in the near future for collaborating with the home base station B4, the processor 200 moves to step S514. Otherwise, the processor 200 moves to step S515.

At step S514, the processor 200 commands the transfer of a response message to the home base station B4 which is representative of a waiting notification.

After that, the processor 200 waits for the reception of a new message in order to execute again the present algorithm. The waiting time is controlled by internal timers in the processor 200 or by a notification from the core network.

At step S515, the processor 200 commands the transfer of a response message to the home base station which transferred the message received at step S500 notifying that the collaboration session is not accepted.

After that, the processor 200 waits for the reception of a new message in order to execute again the present algorithm.

The waiting time is controlled by internal timers in the processor 200 or by a notification from the core network

At step S550 of Fig. 5b, the processor 200 commands the transfer of a message, to each home base station B2, B6 identified in the collaborating neighbour list for the home base station B4, requesting the amount of resources each home base station B2, B6 is ready to allocate for the collaboration.

At next step S551, the processor 200 detects the reception of a response message transferred by each home base station B2, B6 identified in the collaborating neighbour list for the home base station B4. The response messages comprise the amount of resources the home base stations B2 and B6, are ready to allocate for the collaboration.

At next step S552, the processor 200 determines the overall resources which are available for the collaboration using the message or messages received at step S551.

The overall resource may be a quality of service like a throughput or a latency. The overall resources may be the number of home base stations available for collaborating with the home base station B4.

At next step S553, the processor 200 checks if the overall resources determined at step S552 are compatible with the target performance received at step S502.

If the overall resources are compatible with the target performance, the processor 200 moves to step S558. Otherwise, the processor 200 moves to step S554.

At step S554, the processor 200 gets statistics related to the neighbour home base stations which are or not comprised in the list of home base stations available for collaborating with the home base station B4 which sent the message received at step S500.

Statistics may be related to the amount of resources the home base stations which are comprised in the list of home base stations available for collaborating with the home base station B4 are ready to allocate in the collaboration session.

For example, statistics predict the amount of resources the home base stations B2 and B6 are ready to allocate in the collaboration session with other home base stations at different periods of the day or of a week.

Statistics are related to the availability of the neighbour home base stations which are not comprised in the list of home base stations available for collaborating with the home base station B4 to collaborate with other home base stations.

For example, statistics predict the amount of resources the home base stations B3 and B5 are ready to allocate in the collaboration session with home base stations at different periods of the day or of a week.

At next step S555, the processor 200 checks if, according to the statistics, a possible collaboration may be set in the future.

If a possible collaboration may be set in the future, the processor 200 moves to step S556. Otherwise, the processor 200 moves to step S557.

At step S556, the processor 200 commands the transfer of a response message to the home base station B4 which is representative of a waiting notification.

After that, the processor 200 waits for the reception of a new message in order to execute again the present algorithm. The waiting time is controlled by internal timers in the processor 200 or by a notification from the core network.

At step S557, the processor 200 commands the transfer of a response message to the home base station which transferred the message received at step S500 notifying that the collaboration session is not accepted.

After that, the processor 200 waits for the reception of a new message in order to execute again the present algorithm. The waiting time is controlled by internal timers in the processor 200 or by a notification from the core network.

At step S558, the processor 200 determines the at least one parameter to be used by the home base stations B2, B4 and B6 for the collaboration.

The at least one parameter may be the carrier frequency or frequencies used for uplink and/or downlink channel, information related to the clock synchronisation of the home base station Bi and/or the frequency band or bands used for uplink and/or downlink channel.

At next step S559, the processor 300 commands the transfer of a message to the home base stations B2, B4 and B6 comprising the at least one parameter to be used by the home base stations B2, B4 and B6 for the collaboration.

At next step S560, the processor 200 sets a collaboration session.

The processor 200 commands the transfer of a message to at least one home base station comprised in the list of home base stations available for collaborating with the home base station B4 which transferred the message received at step S500 notifying that a collaboration session starts with the home base station B4 which transferred the message received at step S500.

The processor 200 commands the transfer of a response message to the home base station B4 which transferred the message received at step S500 notifying that the collaboration session is accepted.

The processor 200 commands the establishment of the links L2, L4 and L6 on the communication network.

According to a first example of realisation, the collaboration session may be a handover between the home base station B4 and one neighbour home base station B2 or B6 which is available for collaboration.

The processor 200 commands the transfer to the home base stations B4 and B2 or B4 and B6 or B4, B2 and B6 of information enabling the encryption of transferred data, information related to the ongoing communication like control information and data. The coordinator 10 acts then as a relay for the exchange of data between the home base stations B4 and B2 or B4 and B6 or B4, B2 and B6.

According to a second example of realisation, the collaboration session may be a Joint coordinated multi- point transmission (J-CoMP).

The home base stations B4 and B2 or B4 and B6 or B4, B2 and B6 are synchronized with the coordinator 10.

The home base stations B4 and B2 or B4 and B6 or B4, B2 and B6 receive and transmit information related to the communication from and to the coordinator 10 which acts as a relay for the exchange of data between the home base stations B4 and B2 or B4 and B6 or B4, B2 and B6.

After that, the processor 200 waits for the reception of a new message in order to execute again the present algorithm.

At step S520, the processor 200 sets the flag associated to the home base station B4 which sent the message received at step S500 at the null value.

The null value is representative of the non availability of the home base station to collaborate with at least one other home base station.

At next step S521, the processor 200 updates statistics related to the home base station which sent the message received at step S500.

At next step S522, the processor 200 stops the collaboration session in which the home base station which sent the message received at step S500 is involved.

The processor 200 commands the transfer of a message to each home base station which is currently collaborating with the home base station which transferred the message received at step S500 notifying that the collaboration session is stopped.

The processor 200 commands the transfer of a message to the home base station which transferred the message received at step S500 notifying that the collaboration session is stopped.

The connection with the home base station which transferred the message at step S500 and with each home base station which is neighbour of the home base station and which is available for collaborating is released.

The coordinator 10 stops to relay information between the collaborating home base stations.

After that, the processor 200 waits for the reception of a new message in order to execute again the present algorithm.

Naturally, many modifications can be made to the embodiments of the invention described above without departing from the scope of the present invention.

## Claims

1. Method for enabling home base stations to collaborate in a wireless cellular telecommunication network comprising plural home base stations and a coordinator, the method comprises the steps executed by the coordinator of:
- receiving from a home base station a message notifying that the home base station is available for collaborating with at least another home base station,
- obtaining a list of home base stations which are neighbour of the home base station which transferred the message,
- checking if at least one home base station which is neighbour of the home base station which transferred the message is available for collaborating with at least another home base station,
- determining common parameters to be used by the home base station which transferred the message and the at least one home base station which is neighbour of the home base station and which is available for collaborating,
- transferring the determined common parameters to the home base station which transferred the message and/or to the at least one home base station which is neighbour of the home base station and which is available for collaborating,
- establishing a connection with the home base station which transferred the message and the at least one home base station which is neighbour of the home base station and which is available for collaborating by relaying information received from the home base station which transferred the message to each home base station which is neighbour of the home base station and which is available for collaborating and/or by relaying information received from each home base station which is neighbour of the home base station and which is available for collaborating to the home base station which transferred the message.

2. Method according to claim 1, **characterised in that** the method comprises further steps of:
- receiving from the home base station which transferred the message information representative of a requirement for the collaboration,
- checking if resources that can be provided by the at least one home base station which is neighbour of the home base station and which is available for collaborating are compatible with the requirement,
- establishing the connection only if resources that can be provided by the at least one home base station which is neighbour of the home base station and which is available for collaborating are compatible with the requirement.

3. Method according to claim 2, **characterised in that** the method comprises further steps of :
- determining statistics on the availability of home base stations for collaborating,
- determining if at least one home base station which is neighbour of the home base station which transferred the message may become available for collaborating if no home base station which is neighbour of the home base station which transferred the message is available for collaborating,
- transferring a waiting notification to the home base station which transferred the message if at least one home base station which is neighbour of the home base station which transferred the message may become available for collaborating.

4. Method according to claim 3, **characterised in that** the method comprises further step of notifying the home base station which transferred the message that collaboration session is not accepted if no home base station which is neighbour of the home base station which transferred the message may become available for collaborating.

5. Method according to claim 2, **characterised in that** the method comprises further steps of:
- determining statistics on the availability of home base stations for collaborating,
- determining if resources that can be provided by at least one home base station which is neighbour of the home base station which transferred the message may become compatible with the requirement,
- transferring a waiting notification to the home base station which transferred the message if resources that can be provided by at least one home base station which is neighbour of the home base station which transferred the message may become compatible with the requirement.

6. Method according to claim 5 **characterised in that** the method comprises further step of notifying the home base station which transferred the message that collaboration session is not accepted if resources that can be provided by at least one home base station which is neighbour of the home base station which transferred the message may not become compatible with the requirement.

7. Method according to any of the claims 1 to 6, **characterised in that** the method comprises further steps of :
- receiving from one home base station a message notifying that the home base station is not available for collaborating,
- determining statistics on the availability for collaborating of the home base station which transferred the message notifying that the home base station is not available for collaborating,
- releasing the connection with the home base station which transferred the message notifying that the home base station is not available for collaborating and releases the connection with the at least one home base station which is collaborating with the home base station which transferred the message notifying that the home base station is not available.

8. Method according to any of the claims 1 to 7, **characterised in that** at least two home base stations collaborate by executing a handover of a mobile terminal handled by one of the home base stations.

9. Method according to any of the claims 1 to 7, **characterised in that** at least two home base stations collaborate by executing a joint coordinated multi-point transmission.

10. Method according to any of the claims 1 to 9, **characterised in that** the list of home base stations which are neighbour of the home base station which transferred the message is obtained from at least one measurement report transferred by at least one mobile terminal handled by the home base station which transferred the message and/or by measurements of the home base station which transferred the message.

11. Method according to any of the claims 1 to 10, **characterised in that** a home base station is available for collaborating with at least another home base station if the home base station has enough resources for assuming new communications in which mobile terminals are involved.

12. Method according to any of the claims 1 to 11, **characterised in that** a home base station is available for collaborating with at least another home base station if the link quality between the home base stations on the communication network is higher than a predetermined value.

13. Method according to any of the claims 1 to 12, **characterised in that** a home base station is available for collaborating with at least another home base station if the holder of the home base station configures the home base station into a collaboration mode.

14. Device for enabling home base stations to collaborate in a wireless cellular telecommunication network comprising plural home base stations and a coordinator, the device for enabling home base stations to collaborate is included in the coordinator and comprises:
- means for receiving from a home base station a message notifying that the home base station is available for collaborating with at least another home base station,
- means for obtaining a list of home base stations which are neighbour of the home base station which transferred the message,
- means for checking if at least one home base station which is neighbour of the home base station which transferred the message is available for collaborating with at least another home base station,
- means for determining common parameters to be used by the home base station which transferred the message and the at least one home base station which is neighbour of the home base station and which is available for collaborating,
- means for transferring the determined common parameters to the home base station which transferred the message and/or to the at least one home base station which is neighbour of the home base station and which is available for collaborating,
- means for establishing a connection with the home base station which transferred the message and the at least one home base station which is neighbour of the home base station and which is available for collaborating by relaying information received from the home base station which transferred the message to each home base station which is neighbour of the home base station and which is available for collaborating and/or by relaying information received from each home base station which is neighbour of the home base station and which is available for collaborating to the home base station which transferred the message.

15. Computer program which can be directly loadable into a programmable device, comprising instructions or portions of code for implementing the steps of the method according to claims 1 to 13, when said computer program is executed on a programmable device.

## Patentansprüche

1. Verfahren zum Ermöglichen, dass Heimbasisstationen in einem drahtlosen zellularen Telekommunikationsnetzwerk zusammenarbeiten, das mehrere Heimbasisstationen und einen Koordinator aufweist, wobei das Verfahren die folgenden durch den Koordinator ausgeführten Schritte aufweist:
- Empfangen einer Nachricht von einer Heimbasisstation, welche Nachricht mitteilt, dass die Heimbasisstation zum Zusammenarbeiten mit wenigstens einer anderen Heimbasisstation verfügbar ist,
- Erhalten einer Liste von Heimbasisstationen, die Nachbarn der Heimbasisstation sind, die die Nachricht transferierte,
- Prüfen, ob wenigstens eine Heimbasisstation, die Nachbar der Heimbasisstation ist, die die Nachricht transferierte, zum Zusammenarbeiten mit wenigstens einer anderen Heimbasisstation verfügbar ist,
- Bestimmen gemeinsamer Parameter, um durch die Heimbasisstation, die die Nachricht transferierte, und die wenigstens eine Heimbasisstation, die Nachbar der Heimbasisstation ist und die zum Zusammenarbeiten verfügbar ist, verwendet zu werden,
- Transferieren der bestimmten gemeinsamen Parameter zu der Heimbasisstation, die die Nachricht transferierte, und/oder zu der wenigstens einen Heimbasisstation, die Nachbar der Heimbasisstation ist und die zum Zusammenarbeiten verfügbar ist,
- Aufbauen einer Verbindung mit der Heimbasisstation, die die Nachricht transferierte, und der wenigstens einen Heimbasisstation, die Nachbar der Heimbasisstation ist und die zum Zusammenarbeiten verfügbar ist, durch Weiterleiten von von der Heimbasisstation, die die Nachricht transferierte, empfangener Information zu jeder Heimbasisstation, die Nachbar der Heimbasisstation ist und die zum Zusammenarbeiten verfügbar ist, und/oder durch Weiterleiten von von jeder Heimbasisstation, die Nachbar der Heimbasisstation ist und die zum Zusammenarbeiten verfügbar ist, empfangener Information zu der Heimbasisstation, die die Nachricht transferierte.

2. Verfahren nach Anspruch 1, **dadurch gekennzeichnet, dass** das Verfahren folgende weitere Schritte aufweist:
- Empfangen von Information von der Heimbasisstation, die die Nachricht transferierte, welche Information eine Anforderung für die Zusammenarbeit darstellt,
- Prüfen, ob Betriebsmittel, die durch die wenigstens eine Heimbasisstation vorgesehen sein können, die Nachbar der Heimbasisstation ist und die zum Zusammenarbeiten verfügbar ist, mit der Anforderung kompatibel sind,
- Aufbauen der Verbindung nur dann, wenn Betriebsmittel, die durch die wenigstens eine Heimbasisstation vorgesehen sein können, die Nachbar der Heimbasisstation ist und die zum Zusammenarbeiten verfügbar ist, mit der Anforderung kompatibel sind.

3. Verfahren nach Anspruch 2, **dadurch gekennzeichnet, dass** das Verfahren folgende weitere Schritte aufweist:
- Bestimmen von Statistiken über die Verfügbarkeit von Heimbasisstationen zum Zusammenarbeiten,
- Bestimmen, ob wenigstens eine Heimbasisstation, die Nachbar der Heimbasisstation ist, die die Nachricht transferierte, zum Zusammenarbeiten verfügbar werden kann, wenn keine Heimbasisstation, die Nachbar der Heimbasisstation ist, die die Nachricht transferierte, zum Zusammenarbeiten verfügbar ist,
- Transferieren einer Wartemitteilung zu der Heimbasisstation, die die Nachricht transferierte, wenn wenigstens eine Heimbasisstation, die Nachbar der Heimbasisstation ist, die die Nachricht transferierte, zum Zusammenarbeiten verfügbar werden kann.

4. Verfahren nach Anspruch 3, **dadurch gekennzeichnet, dass** das Verfahren einen weiteren Schritt zum Mitteilen der Heimbasisstation, die die Nachricht transferierte, dass eine Zusammenarbeitssession nicht akzeptiert wird, wenn keine Heimbasisstation, die Nachbar der Heimbasisstation ist, die die Nachricht transferierte, zum Zusammenarbeiten verfügbar werden kann, aufweist.

5. Verfahren nach Anspruch 2, **dadurch gekennzeichnet, dass** das Verfahren folgende weitere Schritte aufweist:
- Bestimmen von Statistiken über die Verfügbarkeit von Heimbasisstationen zum Zusammenarbeiten,
- Bestimmen, ob Betriebsmittel, die durch wenigstens eine Heimbasisstation, die Nachbar der Heimbasisstation ist, die die Nachricht transferierte, vorgesehen sein können, mit der Anforderung kompatibel werden können,
- Transferieren einer Wartemitteilung zu der Heimbasisstation, die die Nachricht transferierte, wenn Betriebsmittel, die durch wenigstens eine Heimbasisstation vorgesehen sein können, die Nachbar der Heimbasisstation ist, die die Nachricht transferierte, mit der Anforderung kompatibel werden können.

6. Verfahren nach Anspruch 5, **dadurch gekennzeichnet**, das das Verfahren einen weiteren Schritt zum Mitteilen der Heimbasisstation, die die Nachricht transferierte, dass eine Zusammenarbeitssession nicht akzeptiert wird, wenn Betriebsmittel, die durch wenigstens eine Heimbasisstation vorgesehen sein können, die Nachbar der Heimbasisstation ist, die die Nachricht transferierte, mit der Anforderung nicht kompatibel werden können, aufweist.

7. Verfahren nach einem der Ansprüche 1 bis 6, **dadurch gekennzeichnet, dass** das Verfahren folgende weitere Schritte aufweist:
- Empfangen einer Nachricht von einer Heimbasisstation, welche Nachricht mitteilt, dass die Heimbasisstation nicht zum Zusammenarbeiten verfügbar ist,
- Bestimmen von Statistiken über die Verfügbarkeit zum Zusammenarbeiten der Heimbasisstation, die die Nachricht transferierte, die mitteilt, dass die Heimbasisstation nicht zum Zusammenarbeiten verfügbar ist,
- Trennen der Verbindung mit der Heimbasisstation, die die Nachricht transferierte, die mitteilt, dass die Heimbasisstation nicht zum Zusammenarbeiten verfügbar ist, und die Verbindung mit der wenigstens einen Heimbasisstation trennt, die gerade mit der Heimbasisstation zusammenarbeitet, die die Nachricht transferierte, die mitteilt, dass die Heimbasisstation nicht verfügbar ist.

8. Verfahren nach einem der Ansprüche 1 bis 7, **dadurch gekennzeichnet, dass** wenigstens zwei Heimbasisstationen zusammenarbeiten, indem eine Übergabe eines durch eine der zwei Heimbasisstationen gehandhabten mobilen Endgeräts ausgeführt wird.

9. Verfahren nach einem der Ansprüche 1 bis 7, **dadurch gekennzeichnet, dass** wenigstens zwei Heimbasisstationen zusammenarbeiten, indem ein knotenkoordiniertes Mehrpunkt-Senden ausgeführt wird.

10. Verfahren nach einem der Ansprüche 1 bis 9, **dadurch gekennzeichnet, dass** die Liste von Heimbasisstationen, die Nachbarn der Heimbasisstation sind, die die Nachricht transferierte, von wenigstens einem Messbericht, der durch wenigstens ein durch die Heimbasisstation, die die Nachricht transferierte, gehandhabtes mobiles Endgerät transferiert ist, und/oder durch Messungen der Heimbasisstation, die die Nachricht transferierte, erhalten wird.

11. Verfahren nach einem der Ansprüche 1 bis 10, **dadurch gekennzeichnet, dass** eine Heimbasisstation zum Zusammenarbeiten mit wenigstens einer anderen Heimbasisstation verfügbar ist, wenn die Heimbasisstation genügend Betriebsmittel zum Annehmen neuer Kommunikationen hat, bei welchen mobile Endgeräte beteiligt sind.

12. Verfahren nach einem der Ansprüche 1 bis 11, **dadurch gekennzeichnet, dass** eine Heimbasisstation zum Zusammenarbeiten mit wenigstens einer anderen Heimbasisstation verfügbar ist, wenn die Verbindungsqualität zwischen den Heimbasisstationen an dem Kommunikationsnetzwerk höher als ein vorbestimmter Wert ist.

13. Verfahren nach einem der Ansprüche 1 bis 12, **dadurch gekennzeichnet, dass** eine Heimbasisstation zum Zusammenarbeiten mit wenigstens einer anderen Heimbasisstation verfügbar ist, wenn der Besitzer der Heimbasisstation die Heimbasisstation in einen Zusammenarbeitsmode konfiguriert.

14. Vorrichtung zum Ermöglichen, dass Heimbasisstationen in einem drahtlosen zellularen Telekommunikationsnetzwerk zusammenarbeiten, das mehrere Heimbasisstationen und einen Koordinator aufweist, wobei die Vorrichtung zum Ermöglichen, dass Heimbasisstationen zusammenarbeiten, in dem Koordinator enthalten ist und folgendes aufweist:
- eine Einrichtung zum Empfangen einer Nachricht von einer Heimbasisstation, welche Nachricht mitteilt, dass die Heimbasisstation zum Zusammenarbeiten mit wenigstens einer anderen Heimbasisstation verfügbar ist,
- eine Einrichtung zum Erhalten einer Liste von Heimbasisstationen, die Nachbarn der Heimbasisstation sind, die die Nachricht transferierte,
- eine Einrichtung zum Prüfen, ob wenigstens eine Heimbasisstation, die Nachbar der Heimbasisstation ist, die die Nachricht transferierte, zum Zusammenarbeiten mit wenigstens einer anderen Heimbasisstation verfügbar ist,
- eine Einrichtung zum Bestimmen gemeinsamer Parameter, um durch die Heimbasisstation, die die Nachricht transferierte, und die wenigstens eine Heimbasisstation, die Nachbar der Heimbasisstation ist und die zum Zusammenarbeiten verfügbar ist, verwendet zu werden,
- eine Einrichtung zum Transferieren der bestimmten gemeinsamen Parameter zu der Heimbasisstation, die die Nachricht transferierte, und/oder zu der wenigstens einen Heimbasisstation, die Nachbar der Heimbasisstation ist und die zum Zusammenarbeiten verfügbar ist,
- eine Einrichtung zum Aufbauen einer Verbindung mit der Heimbasisstation, die die Nachricht transferierte, und der wenigstens einen Heimbasisstation, die Nachbar der Heimbasisstation ist und die zum Zusammenarbeiten verfügbar ist, durch Weiterleiten von von der Heimbasisstation, die die Nachricht transferierte, empfangener Information, zu jeder Heimbasisstation, die Nachbar der Heimbasisstation ist und die zum Zusammenarbeiten verfügbar ist, und/oder durch Weiterleiten von von jeder Heimbasisstation, die Nachbar der Heimbasisstation ist und die zum Zusammenarbeiten verfügbar ist, empfangener Information, zu der Heimbasisstation, die die Nachricht transferierte.

15. Computerprogramm, das direkt ladbar in eine programmierbare Vorrichtung sein kann, mit Anweisungen oder Teilbereichen eines Codes zum Implementieren der Schritte des Verfahrens nach den Ansprüchen 1 bis 13, wenn das Computerprogramm auf einer programmierbaren Vorrichtung ausgeführt wird.

## Revendications

1. Méthode pour permettre à des stations de base domestiques de collaborer dans un réseau de télécommunication cellulaire sans fil comportant plusieurs stations de base domestiques et un coordonnateur, **caractérisée en ce que** la méthode comporte les étapes exécutées par le coordonnateur de :
- réception d'une station de base domestique d'un message annonçant que la station de base domestique est disponible pour collaborer avec au moins une autre station de base domestique,
- obtention d'une liste de stations de base domestiques qui sont voisines de la station de base domestique qui a transféré le message,
- vérification si au moins une station de base domestique qui est voisine de la station de base domestique qui a transféré le message est disponible pour collaborer avec au moins une autre station de base domestique,
- détermination des paramètres communs à employer par la station de base domestique qui a transféré le message et la au moins une station de base domestique qui est voisine de la station de base domestique et qui est disponible pour la collaboration,
- transfert des paramètres communs déterminés à la station de base domestique qui a transféré le message et/ou à la au moins une station de base domestique qui est voisine de la station de base domestique et qui est disponible pour la collaboration,
- établissement d'une connexion avec la station de base domestique qui a transféré le message et la au moins une station de base domestique qui est voisine de la station de base domestique et qui est disponible pour collaborer en relayant les informations reçues de la station de base domestique qui a transféré le message à chaque station de base domestique qui est voisine de la station de base domestique et qui est disponible pour collaborer et/ou en relayant les informations reçues de chaque station de base domestique qui est voisine de la station de base domestique et qui est disponible pour collaborer à la station de base domestique qui a transféré le message.

2. Méthode selon la revendication 1, **caractérisée en ce que** la méthode comporte en outre les étapes de :
- réception de la station de base domestique qui a transféré le message d'informations représentatives d'une condition pour la collaboration,
- vérification si les ressources qui peuvent être fournies par au moins une station de base domestique qui est voisine de la station de base domestique et qui est disponible pour collaborer sont compatibles avec la condition,
- établissement de la connexion seulement si les ressources qui peuvent être fournies par la au moins une station de base domestique qui est voisine de la station de base domestique et qui est disponible pour collaborer sont compatibles avec la condition.

3. Méthode selon la revendication 2, **caractérisée en ce que** la méthode comporte en outre les étapes de :
- détermination de statistiques sur la disponibilité des stations de base domestiques pour la collaboration,
- détermination si au moins une station de base domestique qui est voisine de la station de base domestique qui a transféré le message peut devenir disponible pour collaborer si aucune station de base domestique qui est voisine de la station de base domestique qui a transféré le message n'est disponible pour la collaboration,
- transfert d'une notification d'attente à la station de base domestique qui a transféré le message si au moins une station de base domestique qui est voisine de la station de base domestique qui a transféré le message peut devenir disponible pour la collaboration.

4. Méthode selon la revendication 3, **caractérisée en ce que** la méthode comporte en outre l'étape de notification à la station de base domestique qui a transféré le message que la session de collaboration n'est pas acceptée si aucune station de base domestique qui est voisine de la station de base domestique qui a transféré le message ne peut devenir disponible pour la collaboration.

5. Méthode selon la revendication 2, **caractérisée en ce que** la méthode comporte en outre les étapes de :
- détermination de statistiques sur la disponibilité des stations de base domestiques pour la collaboration,
- détermination si les ressources qui peuvent être fournies par au moins une station de base domestique qui est voisine de la station de base domestique qui a transféré le message peuvent devenir compatibles avec la condition,
- transfert d'une notification d'attente à la station de base domestique qui a transféré le message si les ressources qui peuvent être fournies par au moins une station de base domestique qui est voisine de la station de base domestique qui a transféré le message peuvent devenir compatibles avec la condition.

6. Méthode selon la revendication 5 **caractérisée en ce que** la méthode comporte en outre l'étape de notification à la station de base domestique qui a transféré le message que la session de collaboration n'est pas acceptée si les ressources qui peuvent être fournies par au moins une station de base domestique qui est voisine de la station de base domestique qui a transféré le message peuvent ne pas devenir compatibles avec la condition.

7. Méthode selon l'une quelconque des revendications 1 à 6, **caractérisée en ce que** la méthode comporte en outre les étapes de :
- réception d'une station de base domestique d'un message annonçant que la station de base domestique n'est pas disponible pour la collaboration,
- détermination de statistiques sur la disponibilité pour la collaboration de la station de base domestique qui a transféré le message annonçant que la station de base domestique n'est pas disponible pour la collaboration,
- libération de la connexion avec la station de base domestique qui a transféré le message annonçant que la station de base domestique n'est pas disponible pour collaborer et libération de la connexion avec au moins une station de base domestique qui collabore avec la station de base domestique qui a transféré le message annonçant que la station de base domestique n'est pas disponible.

8. Méthode selon l'une quelconque des revendications 1 à 7, **caractérisée en ce que** au moins deux stations de base domestiques collaborent en exécutant un transfert de gestion d'un terminal mobile géré par une des stations de base domestiques.

9. Méthode selon l'une quelconque des revendications 1 à 7, **caractérisée en ce que** au moins deux stations de base domestiques collaborent en exécutant une transmission jointe multipoint coordonnée.

10. Méthode selon l'une quelconque des revendications 1 à 9, **caractérisée en ce que** la liste des stations de base domestiques qui sont voisines de la station de base domestique qui a transféré le message est obtenue à partir d'au moins un rapport de mesure transféré par au moins un terminal mobile géré par la station de base domestique qui a transféré le message et/ou par des mesures par la station de base domestiques qui a transféré le message.

11. Méthode selon l'une quelconque des revendications 1 à 10, **caractérisée en ce que** une station de base domestique est disponible pour collaborer avec au moins une autre station de base domestique si la station de base domestique a assez de ressources pour assumer de nouvelles communications dans lesquelles des terminaux mobiles sont impliqués.

12. Méthode selon l'une quelconque des revendications 1 à 11, **caractérisée en ce que** une station de base domestique est disponible pour collaborer avec au moins une autre station de base domestique si la qualité du lien entre les stations de base domestiques sur le réseau de transmission est supérieure à une valeur prédéterminée.

13. Méthode selon l'une quelconque des revendications 1 à 12, **caractérisée en ce que** une station de base domestique est disponible pour collaborer avec au moins une autre station de base domestique si le possesseur de la station de base domestique configure la station de base domestique dans un mode de collaboration.

14. Dispositif pour permettre à des stations de base domestiques de collaborer dans un réseau de télécommunication cellulaire sans fil comportant plusieurs stations de base domestiques et un coordonnateur, **caractérisé en ce que** le dispositif pour permettre à des stations de base domestiques de collaborer est compris dans le coordonnateur et comporte :
- des moyens de réception d'une station de base domestique d'un message annonçant que la station de base domestique est disponible pour collaborer avec au moins une autre station de base domestique,
- obtention d'une liste de stations de base domestiques qui sont voisines de la station de base domestique qui a transféré le message,
- des moyens de vérification si au moins une station de base domestique qui est voisine de la station de base domestique qui a transféré le message est disponible pour collaborer avec au moins une autre station de base domestique,
- des moyens de détermination des paramètres communs à employer par la station de base domestique qui a transféré le message et la au moins une station de base domestique qui est voisine de la station de base domestique et qui est disponible pour la collaboration,
- des moyens de transfert des paramètres communs déterminés à la station de base domestique qui a transféré le message et/ou à la au moins une station de base domestique qui est voisine de la station de base domestique et qui est disponible pour la collaboration,
- des moyens d'établissement d'une connexion avec la station de base domestique qui a transféré le message et la au moins une station de base domestique qui est voisine de la station de base domestique et qui est disponible pour collaborer en relayant les informations reçues de la station de base domestique qui a transféré le message à chaque station de base domestiques qui est voisine de la station de base domestique et qui est disponible pour collaborer et/ou en relayant les informations reçues de chaque station de base domestique qui est voisine de la station de base domestique et qui est disponible pour collaborer à la station de base domestique qui a transféré le message.

15. Programme informatique qui peut être directement chargeable dans un dispositif programmable, comportant des instructions ou des parties du code pour mettre en application les étapes de la méthode selon les revendications 1 à 13, quand ledit programme informatique est exécuté sur un dispositif programmable.
